# EUROPEAN PATENT APPLICATION

(11) **EP 4 538 025 A2**
(43) Date of publication of application: **16.04.2025**
(21) Application number: 24201113.8
(22) Date of filing: 18.09.2024
(51) Int. Cl.: B29C 70/14, B29C 53/04, B29C 70/54, B29D 99/00

(54) **COMPOSITE STRUCTURE WITH BEND THROUGH WEB AND NUMBER OF FLANGES**

(30) Priority: 13.10.2023 US 202363590272 P; 30.05.2024 US 202418678971
(71) Applicant: The Boeing Company, Arlington, VA 22202 (US)
(72) Inventor: Robins, Brian Gregory, Arlington, 22202 (US); Plummer, Steven Joseph, Arlington, 22202 (US); Willden, Kurtis Shuldberg, Arlington, 22202 (US)
(74) Representative: Witte, Weller & Partner Patentanwälte mbB

(57) **Abstract**

Methods and apparatus for forming a composite structure (1402) with a bend (1404) in a web and (1408) a number of flanges (1406) of the composite structure are presented. A flat uncured composite laminate (701) is placed in contact with a forming surface of a mandrel (600). Pressure is applied to a portion of the flat uncured composite laminate over a kink region (613) in the forming surface (620) of the mandrel to form a bent laminate. The bent laminate and the mandrel are placed into a forming assembly. Overhanging portions (802) of the bent laminate are bent into contact with sides (604) of the mandrel by the forming assembly to form the composite structure, the composite structure having the bend in a web of the composite structure in contact with the forming surface of the mandrel and a number of flanges in contact with the sides of the mandrel.

## Description

### BACKGROUND INFORMATION

### 1. Field:

The present disclosure relates generally to composite manufacturing and more specifically to forming a composite structure with a bend through a web and a number of flanges.

### 2. Background:

Composite materials are strong, light-weight materials created by combining two or more functional components. For example, a composite material may include reinforcing fibers bound in polymer resin matrix. The fibers can take the form of a unidirectional tape, woven cloth or fabric, or a braid. The mechanical properties and other material properties of composite materials can be desirable for some implementations.

Composite manufacturing uses different methods than metal processing due to the different material characteristics. Some composite manufacturing is performed by hand due to complex shapes, especially shapes with bends or kinks. However, it is undesirably time consuming to form composite structures by hand.

Therefore, it would be desirable to have a method and apparatus that takes into account at least some of the issues discussed above, as well as other possible issues. It would be desirable to have an automated method of forming a composite structure with a bend with reduced wrinkles.

### SUMMARY

An embodiment of the present disclosure provides a method of forming a composite structure with a bend in a web and a number of flanges of the composite structure. A flat uncured composite laminate is placed in contact with a forming surface of a mandrel. Pressure is applied to a portion of the flat uncured composite laminate over a kink region in the forming surface of the mandrel to form a bent laminate. The flat uncured composite laminate comprises a plurality of zero degree plies discontinuous along a respective length. The bent laminate and the mandrel are placed into a forming assembly. Overhanging portions of the bent laminate are bent into contact with sides of the mandrel by the forming assembly to form the composite structure, the composite structure having the bend in a web of the composite structure in contact with the forming surface of the mandrel and number of flanges in contact with the sides of the mandrel.

An embodiment of the present disclosure provides a forming system. The forming system comprises a mandrel comprising a web surface with a kink region and flange forming surfaces on either side of the web surface, the flange forming surfaces connected to the web surface by two corner forming edges.

An embodiment of the present disclosure provides a method of forming a composite structure with a bend in a web and a number of flanges of the composite structure. A bent laminate comprising a plurality of composite plies on a mandrel is moved into a forming assembly, the bent laminate in contact with a web surface of the mandrel and comprising overhanging portions overhanging the mandrel, the web surface comprising a kink region comprising a number of kinks forming an angle between a first section and a second section of the web surface in a longitudinal direction of the mandrel. The bent laminate comprises a plurality of zero degree plies having cuts within a desired distance of each kink of the number of kinks. The overhanging portions of the bent laminate are bent into contact with sides of the mandrel by the forming assembly to form the composite structure, the composite structure having the bend in a web of the composite structure in contact with the forming surface of the mandrel and number of flanges in contact with the sides of the mandrel.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an illustration of an aircraft in accordance with an illustrative embodiment;
**Figure 2** is an illustration of a block diagram of a manufacturing environment in accordance with an illustrative embodiment;
**Figure 3** is an illustration of a flowchart of a method of forming a composite structure with a bend in accordance with an illustrative embodiment;
**Figure 4** is a flowchart of a method of forming a composite structure with a bend in a web and a number of flanges of the composite structure in accordance with an illustrative embodiment;
**Figure 5** is an illustration of an isometric view of a composite structure with a number of bends in accordance with an illustrative embodiment;
**Figure 6** is an illustration of an isometric view of a mandrel with a number of kinks in accordance with an illustrative embodiment;
**Figure 7** is an illustration of an isometric view of a mandrel with a number of kinks and a flat uncured composite charge in accordance with an illustrative embodiment;
**Figure 8** is an illustration of an underside of an overhanging portion of a flat uncured composite charge on a mandrel with a number of kinks in accordance with an illustrative embodiment;
**Figure 9** is an illustration of a side view of a presser foot in contact with the flat uncured composite charge over the number of kinks of the mandrel in accordance with an illustrative embodiment;
**Figure 10** is an illustration of an isometric view of a shim in contact with the bent composite charge on the mandrel in accordance with an illustrative embodiment;
**Figure 11** is an illustration of the bent composite charge on the mandrel being introduced into the forming assembly in accordance with an illustrative embodiment;
**Figure 12** is an illustration of an urging device of the forming assembly in accordance with an illustrative embodiment;
**Figure 13** is an illustration of a heater assembly of the forming assembly in accordance with an illustrative embodiment;
**Figure 14** is an illustration of an isometric view of a composite structure with a number of bends in accordance with an illustrative embodiment;
**Figures 15A** and **15B** are a flowchart of a method of forming a composite structure with a bend in a web and a number of flanges of the composite structure in accordance with an illustrative embodiment;
**Figure 16** is a flowchart of a method of forming a composite structure with a bend in a web and a number of flanges of the composite structure in accordance with an illustrative embodiment;
**Figure 17** is an illustration of an aircraft manufacturing and service method in a form of a block diagram in accordance with an illustrative embodiment; and
**Figure 18** is an illustration of an aircraft in a form of a block diagram in which an illustrative embodiment may be implemented.

### DETAILED DESCRIPTION

The illustrative examples recognize and take into account one or more considerations. The illustrative examples recognize and take into account that a bend is present in wing spars for aerospace structure and drag reduction. The illustrative examples recognize and take into account that the bend poses manufacturing challenges for composite fabrication. The illustrative examples recognize and take into account that some spars with bends are manufactured in three or more components.

The illustrative examples allow uncured composite charges to be kinked without undesirable formation of wrinkling in the green composite charge.
The illustrative examples provide methods and an apparatus for forming a composite structure with at least one bend.

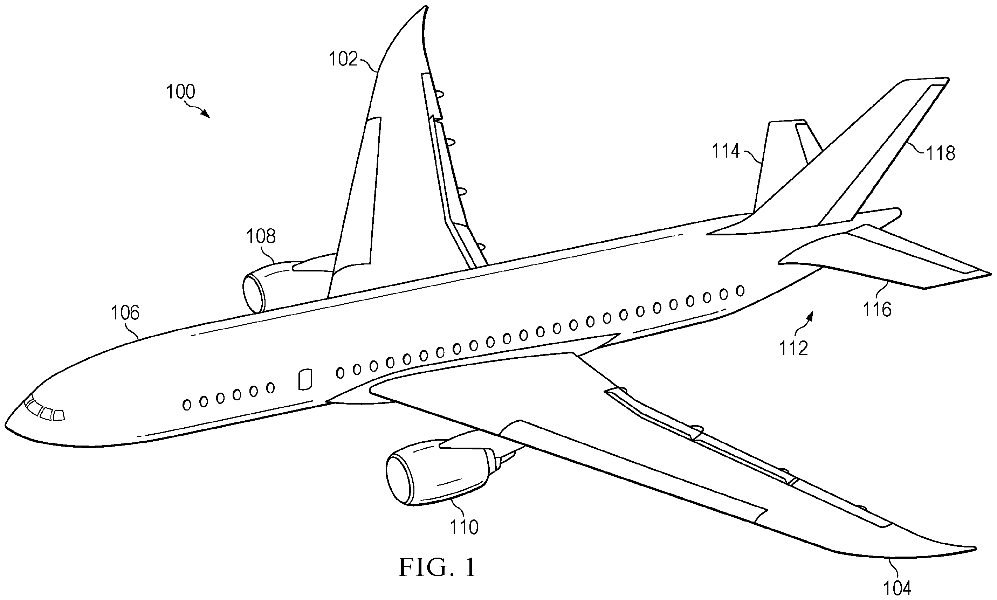

Turning now to **Figure 1****,** an illustration of an aircraft is depicted in accordance with an illustrative embodiment. Aircraft **100** has wing **102** and wing **104** attached to body **106.** Aircraft **100** includes engine **108** attached to wing **102** and engine **110** attached to wing **104.**

Body **106** has tail section **112.** Horizontal stabilizer **114,** horizontal stabilizer **116,** and vertical stabilizer **118** are attached to tail section **112** of body 106.

Aircraft **100** is an example of an aircraft that can have composite structures formed using the illustrative examples. For example, components of at least one of wing **102** or wing **104** can be formed using the illustrative examples. In some illustrative examples, spars of at least one of wing **102** or wing **104** can be formed using the illustrative examples.

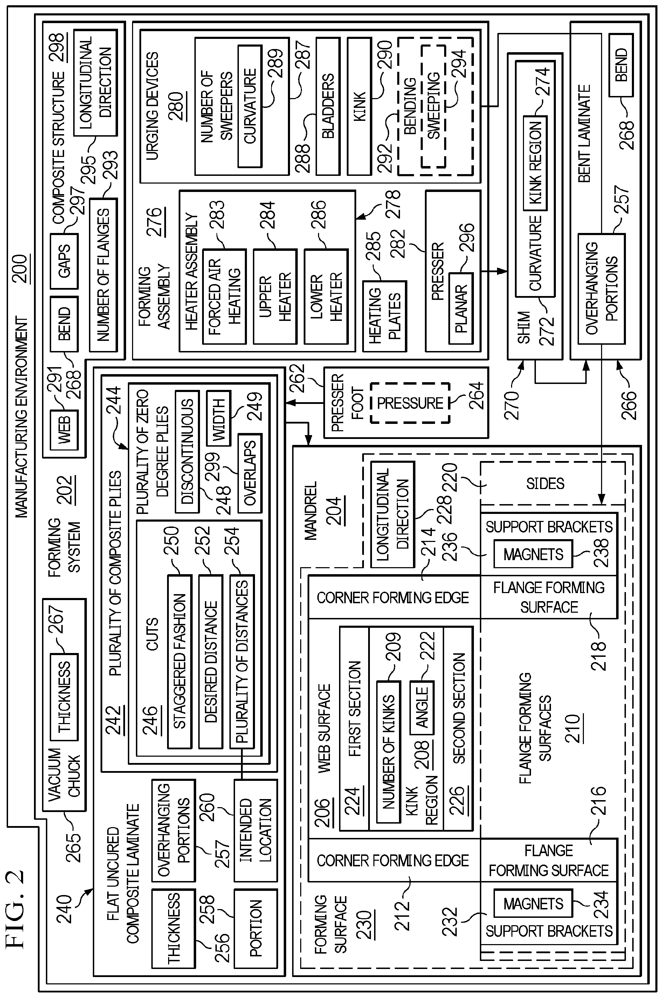

Turning now to **Figure 2****,** an illustration of a block diagram of a manufacturing environment is depicted in accordance with an illustrative embodiment. Forming system **202** is present in manufacturing environment **200.** In some illustrative examples, forming system **202** can be referred to as a composite forming system, a spar forming system, or a longitudinal composite forming system. Forming system **202** comprises mandrel **204.** Mandrel **204** comprises web surface **206** with kink region **208** and flange forming surfaces **210** on either side of web surface **206.** Flange forming surfaces **210** are connected to web surface **206** by two corner forming edges, corner forming edge **212** and corner forming edge **214.** Flange forming surfaces **210** comprise flange forming surface **216** connected to web surface **206** by corner forming edge **212.** Flange forming surfaces **210** comprise flange forming surface **218** connected to web surface **206** by corner forming edge **214.** Web surface **206,** flange forming surface **216** and flange forming surface **218** form forming surface **230** of mandrel **204.** Sides **220** of mandrel **204** comprise flange forming surfaces **210.** Web surface **206** comprises kink region **208** comprising number of kinks **209** forming angle **222** between first section **224** and second section **226** of web surface **206** in longitudinal direction **228** of mandrel **204.** In some illustrative examples, number of kinks **209** comprises more than one kink configured to form bend **268** in composite structure **298.** In some other illustrative examples, number of kinks **209** is a single kink configured to form bend **268** in composite structure **298.**

In some illustrative examples, forming system **202** comprises support brackets, support brackets **236** and support brackets **232,** movably connected to flange forming surfaces **210** of mandrel **204.** Support brackets **236** are movably connected to flange forming surface **218.** Support brackets **232** are movably connected to flange forming surface **216.**

Support brackets **236** and support brackets **232** can be movably connected to flange forming surface **216** by at least one of an active or passive connection. In some illustrative examples, support brackets, support brackets **236** and support brackets **232,** are connected to flange forming surface **216** by vacuum cups, hydraulics, or other forces. In some illustrative examples, the support brackets, support brackets **236** and support brackets **232,** are magnetically connected to flange forming surfaces **210.** The magnetic connection can be passive or active. In some illustrative examples, support brackets **236** and support brackets **232,** are movably connected to flange forming surface **216** by electronic magnets that vary in strength based on electricity supplied. As depicted, support brackets **236** are connected to flange forming surface **218** by magnets **238.** As depicted, support brackets **232** are connected to flange forming surface **216** by magnets **234.**

Support brackets **236** and support brackets **232** support overhanging portions **257** of flat uncured composite laminate **240.** Overhanging portions **257** are portions of flat uncured composite laminate **240** not in contact with mandrel **204** when flat uncured composite laminate **240** is placed in contact with web surface **206.** In some illustrative examples, overhanging portions **257** can be referred to as cantilevered portions.

In some illustrative examples, flat uncured composite laminate **240** is transferred to mandrel **204** using vacuum chuck **265.** In some illustrative examples, vacuum chuck **265** remains on flat uncured composite laminate **240** during forming against forming surface **230** of mandrel **204.** In some illustrative examples, vacuum chuck remains on bent laminate **266** as number of flanges **293** are formed by forming assembly **276.** In some illustrative examples, forming assembly **276** may be referred to as a composite forming assembly, a spar forming assembly, or a longitudinal composite forming assembly. Vacuum chuck **265** helps maintain tension in the composite laminate, flat uncured composite laminate **240** and bent laminate **266,** during forming against forming surface **230.** Thickness **267** of vacuum chuck **265** moves a neutral axis of bending to the interface between flat uncured composite laminate **240** and vacuum chuck **265.**

Vacuum is applied to flat uncured composite laminate **240** to hold flat uncured composite laminate **240** against vacuum chuck **265** while pressure **264** is applied by presser foot **262.** Vacuum chuck **265** is configured such that applying vacuum to flat uncured composite laminate **240** pulls the neutral axis to the intersection between flat uncured composite laminate **240** and vacuum chuck **265.** Applying the vacuum to flat uncured composite laminate **240** keeps flat uncured composite laminate **240** in tension during forming of flat uncured composite laminate **240** against mandrel **204.**

Pressure **264** is applied to flat uncured composite laminate **240** on web surface **206** of mandrel **204** to bend flat uncured composite laminate **240.** In some illustrative examples, pressure **264** is locally applied over flat uncured composite laminate **240** over kink region **208** in web surface **206** of mandrel **204.** In some illustrative examples, forming system **202** comprises presser foot **262** configured to apply pressure **264** locally over kink region **208** in web surface **206.** Applying pressure **264** to flat uncured composite laminate **240** can be referred to as a first forming operation. Bend **268** is formed in the first forming operation.

By applying pressure **264** to flat uncured composite laminate **240** on mandrel **204,** flat uncured composite laminate **240** is bent into bent laminate **266** with bend **268.** Bend **268** matches kink region **208** in web surface **206.** Bent laminate **266** has overhanging portions **257** supported by support brackets **232** and support brackets **236.** Bend **268** forms an angle in between two portions in longitudinal direction **295** of composite structure **298.** Bend **268** extends through web **291** and number of flanges **293.**

Contact between bent laminate **266** and web surface **206** is maintained during a second forming operation. Contact between bent laminate **266** and web surface **206** is maintained by applying pressure to bent laminate **266.** In some illustrative examples, forming system **202** comprises shim **270** having curvature **272** configured to maintain contact between a composite laminate, bent laminate **266,** and web surface **206.** Curvature **272** has kink region **274** matching kink region **208** of mandrel **204.** In some illustrative examples, presser feet are used to maintain contact between bent laminate **266** and web surface **206.**

Bent laminate **266** comprising plurality of composite plies **242** is moved on mandrel **204** into forming assembly **276.** Bent laminate **266** is in contact with web surface **206** of mandrel **204.** Bent laminate **266** comprises overhanging portions **257** overhanging mandrel **204.**

Forming assembly **276** performs bending **292** of overhanging portions **257** of bent laminate **266** into contact with sides **220** of mandrel **204** to form composite structure **298.** Composite structure **298** has bend **268** in web **291** of composite structure **298** in contact with forming surface **230** of mandrel **204** and number of flanges **293** in contact with sides **220** of mandrel **204.** Bent laminate **266** comprises plurality of zero degree plies **244** having cuts **246** within desired distance **252** of bend **268.**

Forming assembly **276** comprises presser **282** that applies pressure to bent laminate **266** over web surface **206.** In some illustrative examples, presser **282** is planar **296,** and shim **270** is positioned between presser **282** and bent laminate **266.** In some illustrative examples, presser **282** takes the form of presser feet that can be adjusted to apply pressure to bent laminate **266** including bend **268.**

Forming system **202** further comprises heater assembly **278** configured to heat bent laminate **266** for bending **292.** In some illustrative examples, heater assembly **278** of forming assembly **276** is a non-contact heating method. In some illustrative examples, forming system **202** comprises heater assembly **278** configured to apply forced air heating **283** locally to composite material over kink region **208.** In some illustrative examples, heater assembly **278** comprises one of IR heating or induction heating.

In some illustrative examples, heater assembly **278** comprises upper heater **284** and lower heater **286.** In some illustrative examples, upper heater **284** heats an upper surface of bent laminate **266.** In some illustrative examples, lower heater **286** heats under at least one of overhanging portions **257** of bent laminate **266.**

In some illustrative examples, forming assembly **276** further comprises heating plates **285.** Heating plates **285** heat bent laminate **266** in planar areas. Heating plates **285** can be used to heat bent laminate **266** outside of bend **268.**

By bending **292** overhanging portions **257** of bent laminate **266** onto flange forming surfaces **210,** number of flanges **293** of composite structure **298** are formed. In some illustrative examples, bending **292** overhanging portions **257** comprises sweeping **294** overhanging portions **257** downward onto sides **220** of mandrel **204.**

Urging devices **280** of forming assembly **276** perform bending **292** of overhanging portions **257.** Urging devices **280** can be formed of any desirable flexible or compressible material. Urging devices **280** comprise kink **290** matching kink region **208** of mandrel **204.** Urging devices **280** may also be referred to as number of sweepers **287.** Number of sweepers **287** has curvature **289** matching web surface **206** of mandrel **204.** Urging devices **280** are configured to form bent laminate **266** downward against mandrel **204** without undesirably affecting bent laminate **266.** In some illustrative examples, urging devices **280** take the form of bladders **288.** Bladders **288** are flexible bladders configured to bend overhanging portions **257** downward without undesirably affecting bent laminate **266.**

Plurality of composite plies **242** are laid up on a layup tool to form flat uncured composite laminate **240.** Plurality of composite plies **242** comprises composite plies having any desirable fiber orientations. The fiber orientations can be selected from zero degree, +/- **45** degree, **90** degrees, or any other desirable fiber orientations. In some illustrative examples, plurality of composite plies **242** comprises a plurality of fiber orientations. Plurality of composite plies **242** comprises plurality of zero degree plies **244.** Cuts **246** are formed in plurality of zero degree plies **244** within desired distance **252** of intended location **260** of bend **268** in plurality of composite plies **242** during lay-up.

In some illustrative examples, cuts **246** extend across the entirety of width **249** of plurality of zero degree plies **244.** When cuts **246** extend across the entirety of width **249** of plurality of zero degree plies **244,** plurality of zero degree plies **244** are discontinuous **248.** In some illustrative examples, cuts **246** are only present in areas of plurality of composite plies **242** that will form number of flanges **293.** In these illustrative examples, cuts **246** are not present in web **291** of composite structure **298.** In some illustrative examples, cuts **246** are present in plurality of composite plies **242** in staggered fashion **250** through thickness **256.** In some illustrative examples, cuts **246** are plurality of distances **254** from intended location **260.**

Cuts **246** in plurality of zero degree plies **244** are staggered through thickness **256** of flat uncured composite laminate **240.** Cuts **246** are staggered through thickness **256** so that successive zero degree plies in plurality of zero degree plies **244** are overlapped from layer to layer. In some illustrative examples, cuts **246** are staggered on both sides of a kink in mandrel **204** so that successive zero degree plies in plurality of zero degree plies **244** are overlapped from layer to layer. Cuts **246** are staggered so that even after gaps are formed in plurality of zero degree plies **244** during forming of bend **268** in web **291** and number of flanges **293,** successive zero degree plies in plurality of zero degree plies **244** are overlapped from layer to layer.

Staggered fashion **250** of cuts **246** creates overlaps **299** of plurality of zero degree plies **244.** Overlaps **299** of plurality of zero degree plies **244** over cuts **246** are configured such that a load is carried through bend **268** in composite structure **298.** Overlaps **299** of plurality of zero degree plies **244** allows for a load to be transferred from a cut of cuts **246** to the next successive zero degree ply of plurality of zero degree plies **244.** Staggering of cuts **246** allows for a load to be carried through bend **268** in composite structure **298** with cuts **246.** Overlaps **299** are configured such that each successive zero degree ply of plurality of zero degree plies **244** still overlaps after gaps **297** are formed in plurality of zero degree plies **244** during bending.

Cuts **246** create cut fibers in each of plurality of zero degree plies **244.** When cuts **246** are created in plurality of zero degree plies **244** during layup, the cut fibers in each zero degree ply will be abutting. In some illustrative examples, a cut of cuts **246** does not remove material from a respective zero degree ply of plurality of zero degree plies **244.** A cut severs the fibers in the respective zero degree ply to cause the ply to be discontinuous **248.**

Forming bend **268** into flat uncured composite laminate **240** causes gaps **297** within plurality of zero degree plies **244** with cuts **246.** Gaps **297** will be present at cuts **246** in plurality of zero degree plies **244.** The size of gaps **297** is different in number of flanges **293** than in web **291.** Gaps **297** in web **291** will be smaller than gaps **297** in number of flanges **293.** In some illustrative example, sizes of gaps **297** change in longitudinal direction **295** of composite structure **298.** In some illustrative examples, gaps **297** closer to a kink in mandrel **204** are larger than gaps **297** farther from the kink. In some illustrative examples, when number of kinks **209** comprises two kinks, gaps **297** formed between the two kinks are larger than gaps formed near the respective kinks or outside of kink region **208.**

In some illustrative examples, gaps **297** in number of flanges **293** have a "fan" or triangular shape through number of flanges **293.** Each gap of gaps **297** increases in size moving away from web **291** in a flange of number of flanges **293.** A portion of a gap near a respective corner forming edge, such as corner forming edge **212** or corner forming edge **214** will be smaller than the portion of the same gap moving down a respective side of sides **220** and away from web surface **206.** In some illustrative examples, the increasing gap and the location of the neutral axis outside of flat uncured composite laminate **240** during bending causes evenly distributing compression load on the fibers regardless of the fiber orientation through at least the kink during the forming. In some illustrative examples, evenly distributing the compression load allows for forming with reducing wrinkling or no wrinkling.

Plurality of composite plies **242** is placed as flat uncured composite laminate **240** onto mandrel **204.** Pressure **264** is applied to flat uncured composite laminate **240** on mandrel **204** to form plurality of composite plies **242** against web surface **206** and form bent laminate **266** having bend **268.**

Pressure **264** is applied to portion **258** of flat uncured composite laminate **240** over kink region **208** in forming surface **230** of mandrel **204** to form bent laminate **266.** Flat uncured composite laminate **240** comprising plurality of zero degree plies **244** discontinuous **248** along a respective length.

Bent laminate **266** and mandrel **204** are placed into forming assembly **276.** Overhanging portions **257** of bent laminate **266** are bent into contact with sides **220** of mandrel **204** by forming assembly **276** to form composite structure **298.** Composite structure **298** has bend **268** in web **291** of composite structure **298** in contact with forming surface **230** of mandrel **204** and number of flanges **293** in contact with sides **220** of mandrel **204** after forming number of flanges **293.**

In some illustrative examples, applying pressure **264** comprises applying pressure **264** downward using presser foot **262** locally over kink region **208** in forming surface **230.** In some illustrative examples, bending **292** overhanging portions **257** of bent laminate **266** comprises sweeping overhanging portions **257** downward onto flange forming surfaces **210** of mandrel **204.**

In some illustrative examples, bending **292** overhanging portions **257** comprises sweeping **294** overhanging portions **257** downward using urging devices **280.**

In some illustrative examples, placing flat uncured composite laminate **240** in contact with forming surface **230** comprises placing flat uncured composite laminate **240** in contact with web surface **206** of mandrel **204** and in contact with support brackets **232,236** movably connected to flange forming surfaces **210** of mandrel **204** on either side of web surface **206** of mandrel **204.** Support brackets **232, 236** can include support brackets near kink region **208** of mandrel **204.** The support brackets near kink region **208** can remain on either side of web surface **206** after forming of flat uncured composite laminate **240** on web surface **206.** The support brackets near kink region **208** can remain on either side of web surface **206** as bent laminate **266** on mandrel **204** is placed into forming assembly **276.** In some illustrative examples, additional support brackets are present in non-kinked regions of mandrel **204.** In some illustrative examples, the additional support brackets outside of kink region **208** can be removed from mandrel **204** prior to placing bent laminate **266** and mandrel **204** into forming assembly **276.**

In some illustrative examples, bending **292** overhanging portions **257** of bent laminate **266** pushes support brackets **232, 236** downward on flange forming surfaces **210** of mandrel **204.** In some illustrative examples, bent laminate **266** is locally heated at bend **268** using forced air heating **283** while bending **292** overhanging portions **257** of bent laminate **266.**

The illustration of manufacturing environment **200** in **Figure 2** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, additional support brackets in addition to support brackets **232** and support brackets **236** can be present in non-kinked regions of mandrel **204.** Support brackets **232** and support brackets **236** near kink region **208** can remain on either side of web surface **206** as bent laminate **266** on mandrel **204** is placed into forming assembly **276.** In some illustrative examples, additional support brackets outside of kink region **208** can be removed from mandrel **204** prior to placing bent laminate **266** and mandrel **204** into forming assembly **276.**

Composite structure **298** is a composite structure having a channel formed between web **291** and number of flanges **293.** In some illustrative examples, composite structure **298** is a composite structure having a C cross-sectional shape. In some illustrative examples, composite structure **298** is a composite structure having a L cross-sectional shape. In some illustrative examples, composite structure **298** is a composite spar.

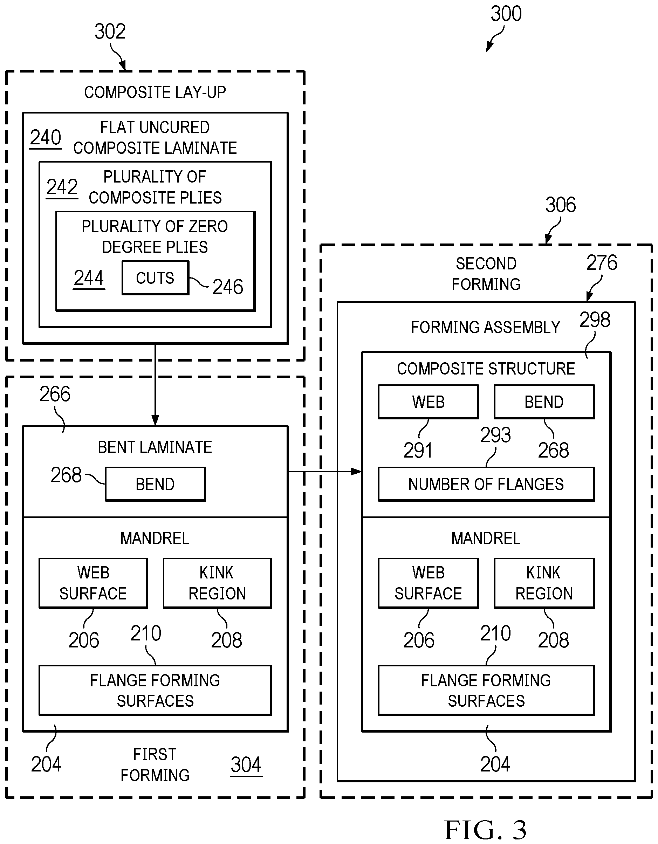

Turning now to **Figure 3****,** an illustration of a flowchart of a method of forming a composite structure with a number of bends is depicted in accordance with an illustrative embodiment. Method **300** is a method that can be performed in manufacturing environment **200** of **Figure 2** to form composite structure **298** using forming system **202.**

In method **300,** flat uncured composite laminate **240** is formed in composite lay-up **302.** In composite lay-up **302,** plurality of composite plies **242** is laid up to form flat uncured composite laminate **240.** In this illustrative example, flat uncured composite laminate **240** comprises plurality of zero degree plies **244** with cuts **246.** Cuts **246** across plurality of zero degree plies **244** allows for forming of flat uncured composite laminate **240** with reduced or prevented wrinkling.

After flat uncured composite laminate **240** is laid up in composite lay-up **302,** flat uncured composite laminate **240** is placed onto mandrel **204.** After placement of flat uncured composite laminate **240** on mandrel **204,** first forming **304** is performed. During first forming **304,** flat uncured composite laminate **240** is formed to web surface **206** with kink region **208.** First forming **304** comprises applying a pressure to flat uncured composite laminate **240** over kink region **208** of mandrel **204** to form flat uncured composite laminate **240** into bent laminate **266** with bend **268.** Bend **268** matches kink region **208** in mandrel **204.** First forming **304** is performed on flat uncured composite laminate **240** to form a web portion.

After first forming **304,** bent laminate **266** on mandrel **204** is transported to forming assembly **276.** Second forming **306** is performed to bend bent laminate **266** onto flange forming surfaces **210.** Forming assembly **276** performs second forming **306** on bent laminate **266** to create composite structure **298.** Composite structure **298** comprises web **291** with bend **268** on web surface **206** of mandrel **204.** Composite structure **298** further comprises number of flanges **293** in contact with flange forming surfaces **210** of mandrel **204.** During second forming **306** forming assembly **276** sweeps overhanging portions of bent laminate **266** onto flange forming surfaces **210** of mandrel **204** to form number of flanges **293.**

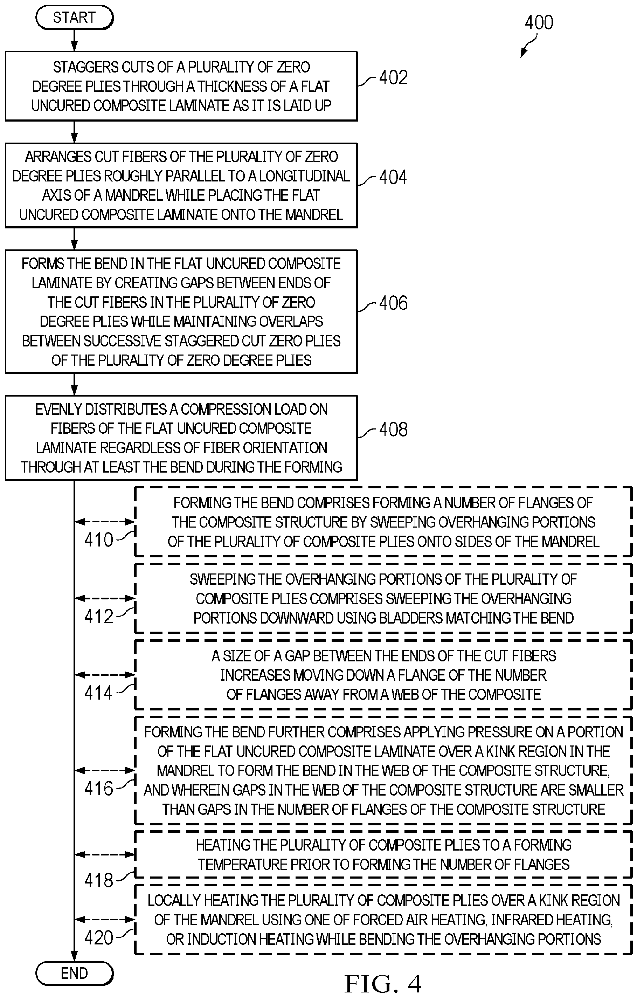

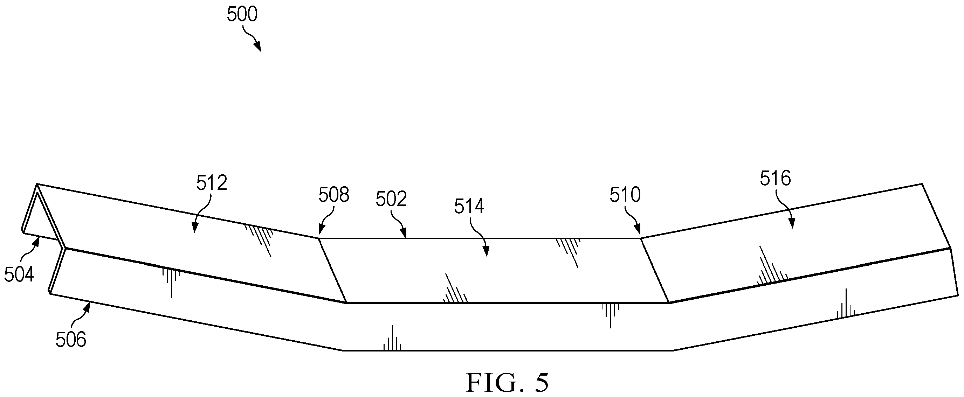

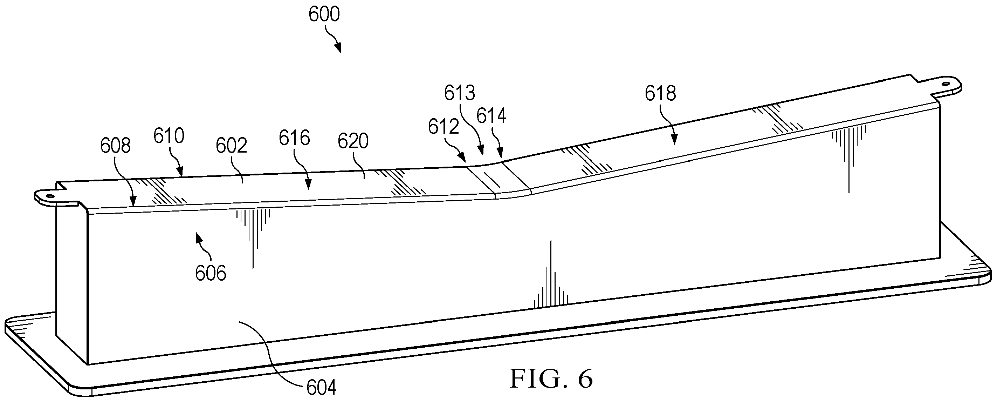

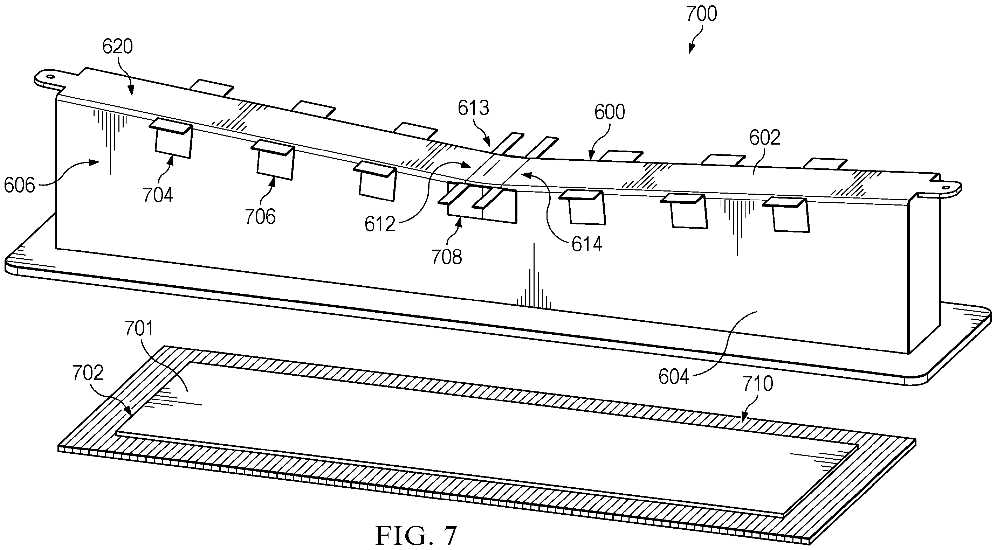

Turning now to **Figure 4****,** a flowchart of a method of forming a composite structure with a bend in a web and a number of flanges of the composite structure is depicted in accordance with an illustrative embodiment. Method **400** can be performed to form a composite structure of aircraft **100** of **Figure 1****.** Method **400** can be used to form composite structure **298** of **Figure 2****.** Method **1600** can be used to perform first forming **304** and second forming **306** of **Figure 3****.** Method **400** can be used to form composite structure **500** of **Figure 5****.** Method **400** can be performed using mandrel **600** of **Figures 6-14****.** Method **400** can be performed on composite laminate **702** of **Figures 7-****14 .**

Method **400** staggers cuts of a plurality of zero degree plies through a thickness of a flat uncured composite laminate as it is laid up (operation **402).** Method **400** arranges cut fibers of the plurality of zero degree plies roughly parallel to a longitudinal axis of a mandrel while placing the flat uncured composite laminate onto the mandrel (operation **404).** Method **400** forms the bend in the flat uncured composite laminate by creating gaps between ends of the cut fibers in the plurality of zero degree plies while maintaining overlaps between successive staggered cut zero plies of the plurality of zero degree plies (operation **406).** The overlaps between the successive staggered cut zero plies allow for transferring load to neighboring zero degree plies despite cuts present in the plies. Method **400** evenly distributes a compression load on fibers of the flat uncured composite laminate regardless of fiber orientation through at least the bend during the forming (operation **408).**

In some illustrative examples, the flat uncured composite laminate comprises a plurality of composite plies including the plurality of zero degree plies. In some illustrative examples, forming the bend comprises forming a number of flanges of the composite structure by sweeping overhanging portions of the plurality of composite plies onto sides of the mandrel (operation **410).** In some illustrative examples, sweeping the overhanging portions of the plurality of composite plies comprises sweeping the overhanging portions downward using bladders matching the bend (operation **412).** In some illustrative examples, a size of a gap between the ends of the cut fibers increases moving down a flange of the number of flanges away from a web of the composite structure (operation **414).** In some illustrative examples, a gap in a cut zero degree ply has a triangular or "fan" shape moving down a respective flange away from a web surface of the mandrel. In some illustrative examples, the size of the gap increases in a flange of the plurality of flanges moving in the direction of sweeping.

In some illustrative examples, forming the bend further comprises applying pressure on a portion of the flat uncured composite laminate over a kink region in the mandrel to form the bend in the web of the composite structure, and wherein gaps in the web of the composite structure are smaller than gaps in the number of flanges of the composite structure (operation **416).** In some illustrative examples, the bend is forming in the web prior to forming the bend in the flanges.

In some illustrative examples, method **400** heats the plurality of composite plies to a forming temperature prior to forming the number of flanges (operation **418).** In some illustrative examples, a heating system uses heating plates in non-kinked regions to heat the plurality of composite plies. In some illustrative examples, the heating system comprises at least one non-contact method of heating.

In some illustrative examples, method **400** locally heating the plurality of composite plies over a kink region of the mandrel using one of forced air heating, infrared heating, or induction heating while bending the overhanging portions (operation **420).**

Turning now to **Figure 5****,** an illustration of an isometric view of a composite structure with a number of bends is depicted in accordance with an illustrative embodiment. Composite structure **500** is a physical implementation of composite structure **298** of **Figures 2** and **3****.** Composite structure **500** can be a component of aircraft **100** of **Figure 1****.**

Composite structure **500** comprises web **502,** flange **504,** and flange **506.** Web **502** has bend **508** and bend **510.** Bend **508** introduces an angle between web portion **512** and web portion **514.** Bend **510** introduces an angle between web portion **514** and web portion **516.**

Either of bend **508** or bend **510** can be created using a kink region of mandrel, such as kink region **613** of mandrel 600 in **Figure 6****.** In some illustrative examples, composite structure **500** can be formed on a mandrel having two kink regions, a first kink region to form bend **508** and a second kink region to form bend **510.** Although the illustrative examples in **Figures 6-14** show a single kink region, kink region **613,** any desirable quantity of kink regions can be present in a mandrel to form a composite structure with a number of bends.

Further, each kink region of a mandrel can comprise any desirable quantity of kinks. For example, bend **508** can be formed by a kink region of a mandrel comprising only one kink. In other illustrative examples, bend **508** can be formed by a kink region of a mandrel comprising more than one kink. Kink region **613** is a physical implementation of a kink region with more than one kink present to form a single bend in a composite structure. Likewise, bend **510** can be formed by a kink region of a mandrel comprising only one kink. In other illustrative examples, bend **510** can be formed by a kink region of a mandrel comprising more than one kink.

Turning now to **Figure 6****,** an illustration of an isometric view of a mandrel with a number of kinks is depicted in accordance with an illustrative embodiment. Mandrel **600** is a physical implementation of mandrel **204** of **Figures 2** and **3****.** Mandrel **600** can be used to form a composite component of aircraft **100** of **Figure 1****.** Mandrel **600** can be used to form a bend, such as bend **508** or bend **510** in composite structure **500** of **Figure 5****.**

Mandrel **600** comprises web surface **602** and sides **604.** Sides **604** comprises flange forming surfaces **606.** Flange forming surfaces **606** are on either side of web surface **602.** Flange forming surfaces **606** are connected to web surface **602** by two corner forming edges, corner forming edge **608** and corner forming edge **610.**

Web surface **602** has kink **612** and kink **614.** Kink **612** and kink **614** introduce a change in angle of web surface **602.** Kink **612** and kink **614** can be used to form a bend in a composite structure such as bend **508** or bend **510** in composite structure **500.** Kink **612** and kink **614** introduce a change in angle between first section **616** and second section **618** of web surface **602.** In some illustrative examples, kink **612,** kink **614,** and the region between kink **612** and kink **614** can be referred to as kink region **613.**

Web surface **602** and flange forming surfaces **606** create forming surface **620.** By applying pressure to a composite laminate on mandrel **600,** the composite laminate is formed to forming surface **620.**

In this illustrative example, kink **612** and kink **614** are a number of kinks used together to form a single bend in composite structure. In some other non-depicted illustrative examples, a single kink can be used to form a bend in a composite structure.

Turning now to **Figure 7****,** an illustration of an isometric view of a mandrel with a number of kinks and a flat uncured composite charge is depicted in accordance with an illustrative embodiment. View **700** is a view of mandrel **600** and composite laminate **702** to be formed on mandrel **600.** Composite laminate **702** comprises flat uncured composite laminate **701.**

Support brackets **704** are movably connected to flange forming surfaces **606** of mandrel **600.** Support brackets **704** are present to support overhanging portions of composite laminate **702** on mandrel **600** during transfer into the forming machine.

As depicted, support brackets **704** comprise support brackets **706** outside of kink **612** and kink **614** and support brackets **708** near kink **612** and kink **614.** Support brackets **704** are movably connected to mandrel **600** to provide for removal of support brackets **704.** Support brackets **704** are movably connected to mandrel **600** so that at least one support bracket of support brackets **704** can be moved downward by sweeping composite laminate **702** onto flange forming surfaces **606** of mandrel **600** during the flange forming operation.

Flat uncured composite laminate **701** will be placed in contact with forming surface **620** of mandrel **600.** In this illustrative example, flat uncured composite laminate **701** will be placed in contact with web surface **602** of mandrel **600.** In some illustrative examples, placing flat uncured composite laminate **701** in contact with forming surface **620** comprises placing flat uncured composite laminate **701** in contact with web surface **602** of mandrel **600** and in contact with support brackets **704** movably connected to flange forming surfaces **606** of mandrel **600** on either side of web surface **602** of mandrel **600.**

When flat uncured composite laminate **701** is initially placed on mandrel **600,** flat uncured composite laminate **701** bridges across mandrel **600.** Until pressure is applied to flat uncured composite laminate **701** over kink **612** and kink **614,** flat uncured composite laminate **701** is not in contact with kink **612** and kink **614.**

Flat uncured composite laminate **701** is present on vacuum chuck **710.** Vacuum chuck **710** helps maintain tension in composite laminate **702** during forming against forming surface **620.** A thickness of vacuum chuck **710** moves a neutral axis of bending to the interface between composite laminate **702** and vacuum chuck **710.**

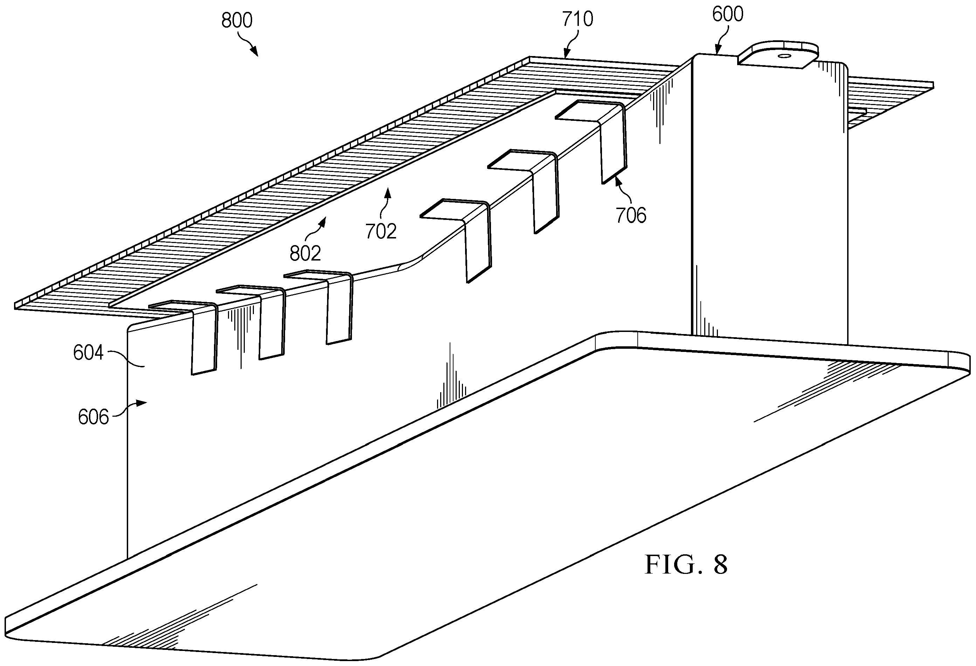

Turning now to **Figure 8****,** an illustration of an underside of an overhanging portion of a flat uncured composite charge on a mandrel with a number of kinks is depicted in accordance with an illustrative embodiment. In view **800** composite laminate **702** has been placed onto mandrel **600.** In view **800,** overhanging portion **802** of composite laminate **702** is supported by support brackets **704** movably connected to flange forming surfaces **606.** Vacuum is applied to flat uncured composite laminate **702** to hold flat uncured composite laminate **702** against vacuum chuck **710.**

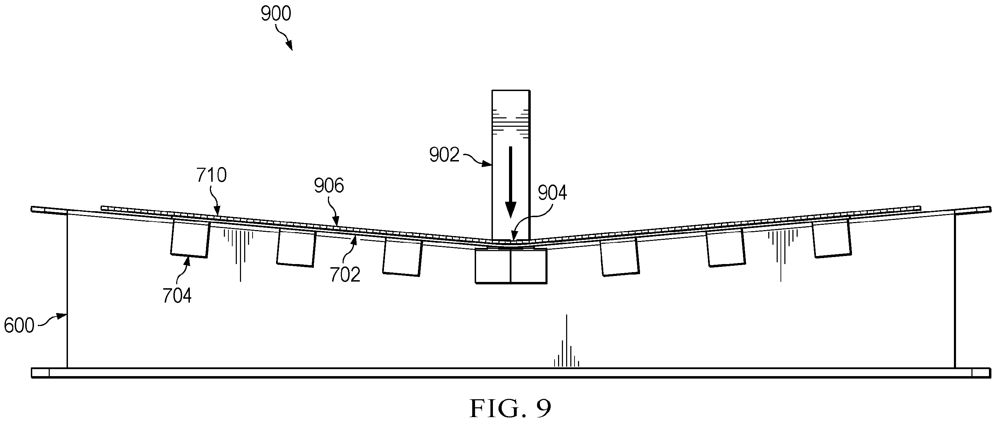

Turning now to **Figure 9****,** an illustration of a side view of a presser foot in contact with the flat uncured composite charge over the number of kinks of the mandrel is depicted in accordance with an illustrative embodiment. View **900** is a view of forming bend **904** into composite laminate **702** to form bent laminate **906.** View **900** is a view of first forming **304** of **Figure 3****.**

In view **900,** pressure is applied to a portion of composite laminate **702** over kink **612** and kink **614** in web surface **602** of mandrel **600** to form bent laminate **906** with bend **904.** As depicted, applying the pressure comprises applying pressure downward using presser foot **902** locally over the portion of composite laminate **702** over kink **612** and kink **614** in forming surface **620** of mandrel **600.**

Vacuum is applied to composite laminate **701** to hold composite laminate **701** against vacuum chuck **710** while pressure is applied by presser foot **902.** Vacuum chuck **710** is configured such that applying vacuum to composite laminate **701** pulls the neutral axis to the intersection between composite laminate **701** and vacuum chuck **710.** Applying the vacuum to composite laminate **701** keeps composite laminate **701** in tension during forming of composite laminate **701** against mandrel **600.**

Although pressure is applied in view **900** directly over kink region **613,** in other non-depicted examples additional forces can be applied in other regions of composite laminate **701.** In some illustrative examples, optional constant or variable distributed forces can be applied to composite laminate **701** outside of kink region **613.**

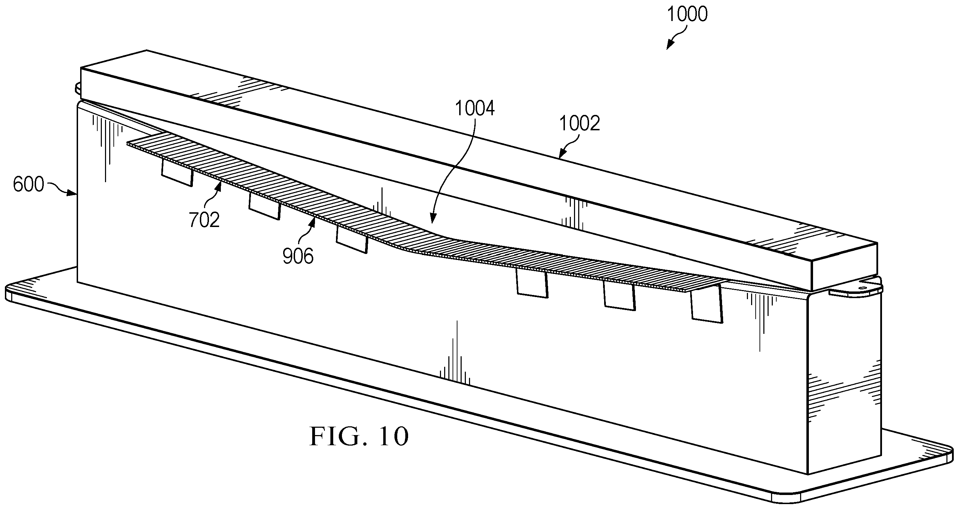

Turning now to **Figure 10****,** an illustration of an isometric view of a shim in contact with the bent composite charge on the mandrel is depicted in accordance with an illustrative embodiment. View **1000** is a view of composite laminate **702** in the form of bent laminate **906.** Bent laminate **906** comprises bend **904.**

A first forming has been performed on composite laminate **702** to form bend **904** in the portion of composite laminate **702** over web surface **602** of mandrel **600.** Shim **1002** has been positioned over bent laminate **906.** Shim **1002** has curvature **1004** with kink to maintain contact between bent laminate **906** and the forming surface **620** of mandrel **600** during bending of bent laminate **906** in a second forming operation.

Shim **1002** is one illustrative example to maintain contact between bent laminate **906** and forming surface **620** of mandrel **600.** In other illustrative examples, separate presser feet can be used to maintain contact between bent laminate **906** and forming surface **620** of mandrel **600.** In some illustrative examples, the presser feet are a portion of a forming assembly, such as forming assembly **276** of **Figure 2****.**

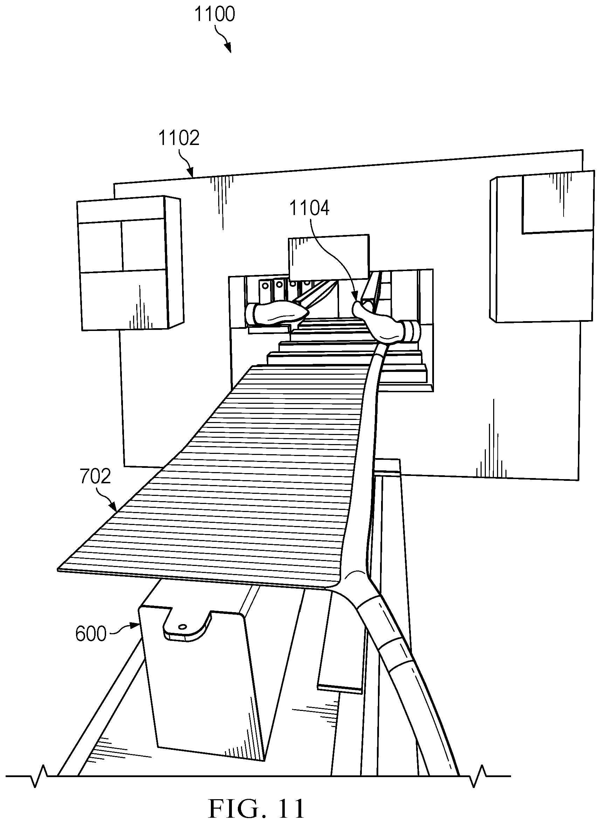

Turning now to **Figure 11****,** an illustration of the bent composite charge on the mandrel being introduced into the forming assembly is depicted in accordance with an illustrative embodiment. In view **1100,** composite laminate **702** in the form of bent laminate **906** is present on mandrel **600.** Bent laminate **906** on mandrel **600** is positioned to be placed into forming assembly **1102.** Forming assembly **1102** comprises urging device **1104.** Urging device **1104** may also be referred to as a "sweeper".

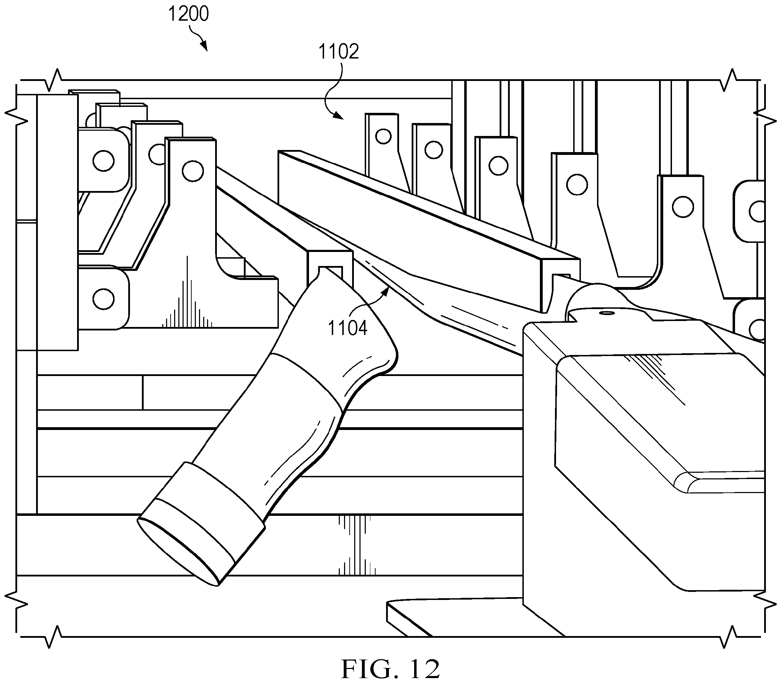

Turning now to **Figure 12****,** an illustration of an urging device of the forming assembly is depicted in accordance with an illustrative embodiment. In view **1200,** urging device **1104** of forming assembly **1102** is visible. In this illustrative example, urging device **1104** takes the form of a flexible bladder. Urging device **1104** may also be referred to as a sweeper. Urging device **1104** can be formed of any desirable flexible or compressible material. Urging device **1104** is configured to form composite laminate **702** downward against mandrel **600** without undesirably affecting composite material **702.**

Urging device **1104** will apply pressure downward on an overhanging portion of composite laminate **701** on one side of mandrel **600.** Although not visible in view **1200,** a second urging device can apply pressure downward to a second overhanging portion of composite laminate **701** on the opposite side of mandrel **600.** Urging device **1104** and the second urging device will follow the contour of a web of composite laminate **701** including the bend.

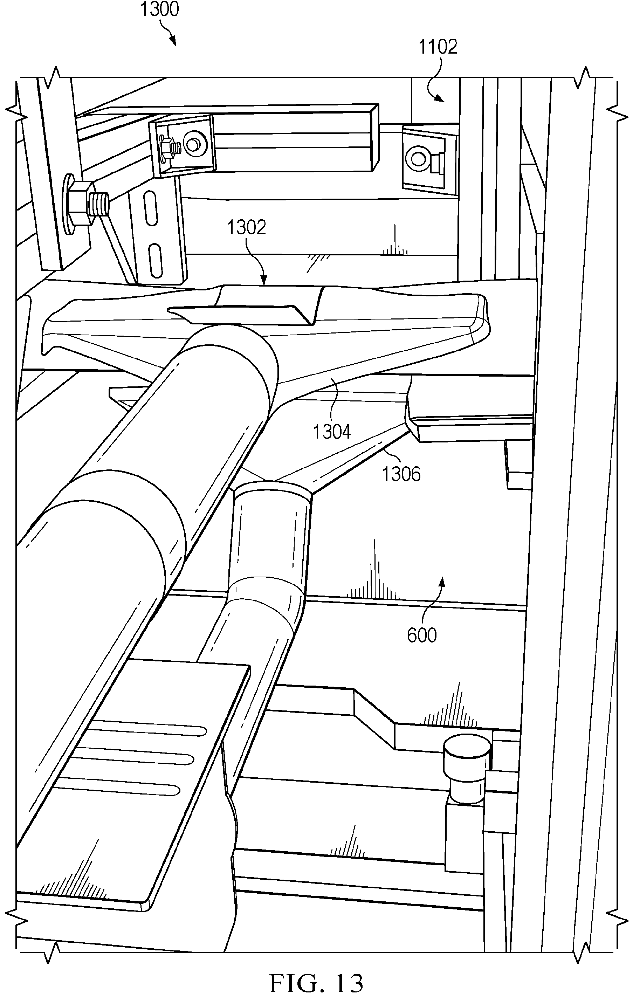

Turning now to **Figure 13****,** an illustration of a heater assembly of the forming assembly is depicted in accordance with an illustrative embodiment. Heater assembly **1302** of forming assembly **1102** is visible in view **1300.** In this illustrative example, heater assembly **1302** comprises forced air heater **1304** and forced air heater **1306.** Forced air heater **1304** is positioned to heat an upper portion of composite laminate **702.** Forced air heater **1306** is positioned to heat an underside of the composite laminate **702.** In other illustrative examples, heater assembly **1302** can take a form other than a forced air heater. In some illustrative examples, heater assembly **1302** comprises at least one of forced air heating, radiant heating, infrared heating, induction heating, or other non-contact heating.

Heater assembly **1302** is positioned in forming assembly **1102** to heat a portion of composite laminate **702** with bend **904.** In some illustrative examples, heater assembly **1302** further comprises heating plates to heat portions of the composite laminate that are planar.

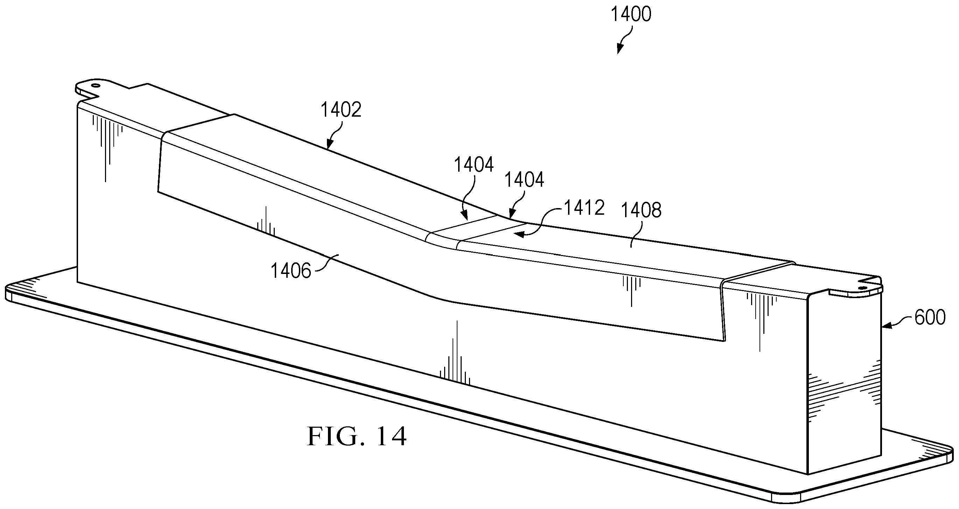

Turning now to **Figure 14****,** an illustration of an isometric view of a composite structure with a number of bends is depicted in accordance with an illustrative embodiment. In forming assembly **1102** of **Figures 11-13****,** a second forming operation is performed to form composite laminate **702** into composite structure **1402.** Composite structure **1402** exits forming assembly **1102** of **Figures 11-****13** on mandrel **600.** In view **1400,** web **1408** with bend region **1404** and number of flanges **1406** are visible. Bend region **1404** includes bend **1410,** bend **1412,** and the portion of web **1408** between bend **1410** and bend **1412.**

Composite structure **1402** is a composite structure having a channel formed between web **1408** and number of flanges **1406.** In some illustrative examples, composite structure **1402** is a composite structure having a C cross-sectional shape. In some illustrative examples, composite structure **1402** is a composite structure having a L cross-sectional shape.

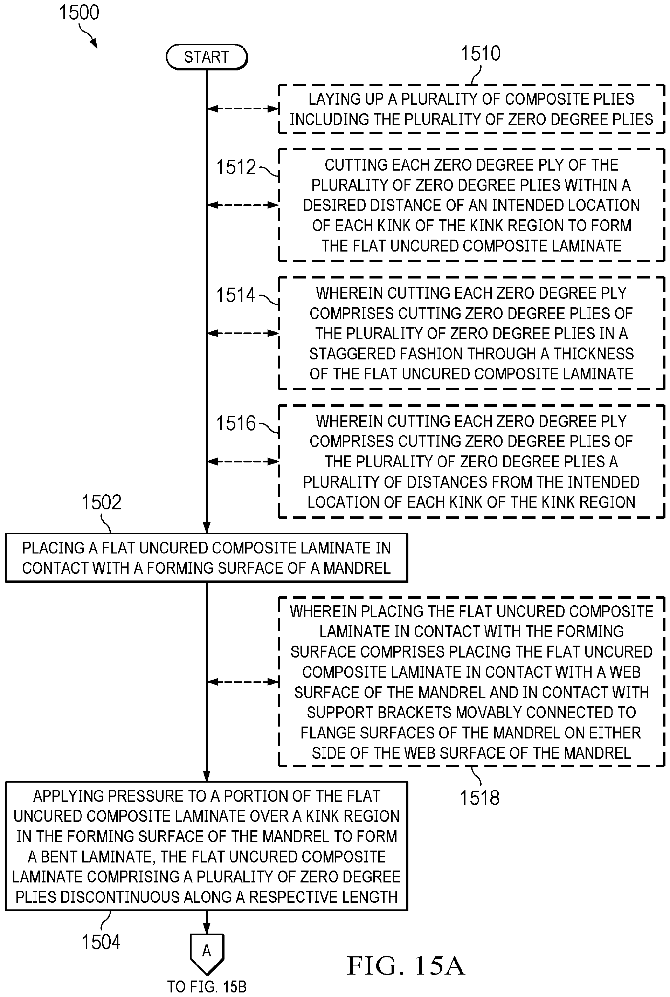

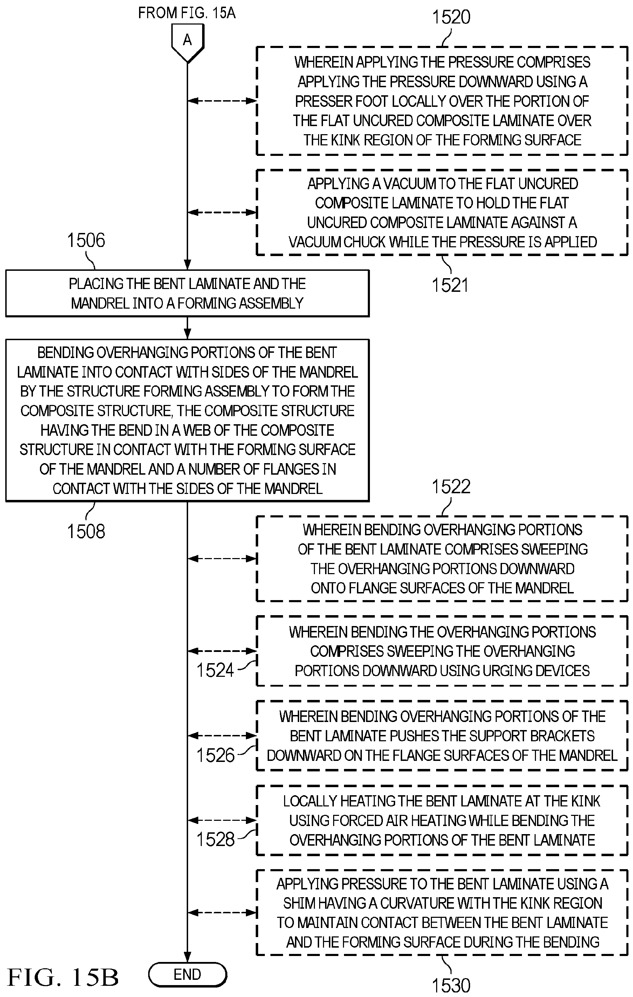

Turning now to **Figures 15A** and **15B****,** a flowchart of a method of forming a composite structure with a bend in a web and a number of flanges of the composite structure is depicted in accordance with an illustrative embodiment. Method **1500** can be performed to form a composite structure of aircraft **100** of **Figure 1****.** Method **1500** can be used to form composite structure **298** of **Figure 2****.** Method **1500** can be used to perform first forming **304** and second forming **306** of **Figure 3****.** Method **1500** can be used to form composite structure **500** of **Figure 5****.** Method **1500** can be performed using mandrel **600** of **Figures 6-14****.** Method **1500** can be performed on composite laminate **702** of **Figures 7-14****.**

A flat uncured composite laminate is placed in contact with a forming surface of a mandrel (operation **1502).** Pressure is applied to a portion of the flat uncured composite laminate over a kink region in the forming surface of the mandrel to form a bent laminate (operation **1504).** The bent laminate and the mandrel are placed into a forming assembly (operation **1506)**. Overhanging portions of the bent laminate are bent into contact with sides of the mandrel by the forming assembly to form the composite structure, the composite structure having the bend in a web of the composite structure in contact with the forming surface of the mandrel and number of flanges in contact with the sides of the mandrel (operation **1508).** Afterwards, method **1500** terminates.

In some illustrative examples, method **1500** lays up a plurality of composite plies including the plurality of zero degree plies (operation **1510).** In some illustrative examples, method **1500** cuts each zero degree ply of the plurality of zero degree plies during layup. In some illustrative examples, method **1500** cuts each zero degree ply of the plurality of zero degree plies in regions that will become number of flanges in the composite structure. In some illustrative examples, method **1500** cuts each zero degree ply of the plurality of zero degree plies within a desired distance of an intended location of each kink of the kink region to form the flat uncured composite laminate (operation **1512).** In some illustrative examples, method **1500** cuts each zero degree ply of the plurality of zero degree plies across its width within a desired distance of an intended location of the kink to form the flat uncured composite laminate.

In some illustrative examples, cutting each zero degree ply comprises cutting zero degree plies of the plurality of zero degree plies in a staggered fashion through a thickness of the flat uncured composite laminate (operation **1514).** By cutting the plurality of zero degree plies in a staggered fashion, mechanical properties are not undesirably affected in the regions of the cuts.

In some illustrative examples, cutting each zero degree ply comprises cutting zero degree plies of the plurality of zero degree plies a plurality of distances from the intended location of each kink of the kink region (operation **1516).** The plurality of distances distributes the effects of the cuts across a larger distance. The plurality of distances are present so that mechanical properties are not undesirably affected in the regions of the cuts.

In some illustrative examples, placing the flat uncured composite laminate in contact with the forming surface comprises placing the flat uncured composite laminate in contact with a web surface of the mandrel and in contact with support brackets movably connected to flange forming surfaces of the mandrel on either side of the web surface of the mandrel (operation **1518).** In some illustrative examples, the support brackets can be movably connected by being magnetically connected to the flange forming surfaces. In some illustrative examples, the support brackets are present on the sides of the kink of the mandrel. In some illustrative examples, additional support brackets can be movably connected to the flange forming surfaces outside of the kink.

In some illustrative examples, applying the pressure comprises applying the pressure downward using a presser foot locally over the portion of the flat uncured composite laminate over the kink region of the forming surface (operation **1520).** In some illustrative examples, the presser foot can gradually apply pressure to the composite laminate over the kink in the mandrel.

In some illustrative examples, method 1500 applies a vacuum to the flat uncured composite laminate to hold the flat uncured composite laminate against a vacuum chuck while the pressure is applied (operation **1521).** A thickness of the vacuum chuck moves a neutral axis of bending to the interface between the composite laminate and the vacuum chuck.

In some illustrative examples, bending overhanging portions of the bent laminate comprises sweeping the overhanging portions downward onto flange forming surfaces of the mandrel (operation **1522).** In some illustrative examples, sweeping the overhanging portions comprises sweeping the overhanging portions downward using flexible bladders (operation **1524).** In some illustrative examples, bending overhanging portions of the bent laminate pushes the support brackets downward on the flange forming surfaces of the mandrel (operation **1526).** In some illustrative examples, the support brackets pushed downward can be present near the kink.
In some illustrative examples, additional support brackets outside of the kink can be removed from the flange forming surfaces prior to bending overhanging portions downward.

In some illustrative examples, method **1500** locally heats the bent laminate at the kink using forced air heating while bending the overhanging portions of the bent laminate (operation **1528).** In other illustrative examples, method **1500** locally heats the bent laminate at the kink using other non-contact methods such as IR heating or induction heating. In some illustrative examples, method **1500** heats the bent laminate in areas outside of the kink using heated plates.

In some illustrative examples, method **1500** applies pressure to the bent laminate using a shim having a curvature with the kink region to maintain contact between the bent laminate and the forming surface during the bending (operation **1530).** In these illustrative examples, the shim can provide equal pressure application from a planar presser foot to the bent laminate with the kink. In some illustrative examples, method **1500** applies pressure to the bent laminate using presser feet to maintain contact between the bent laminate and the web surface during the bending.

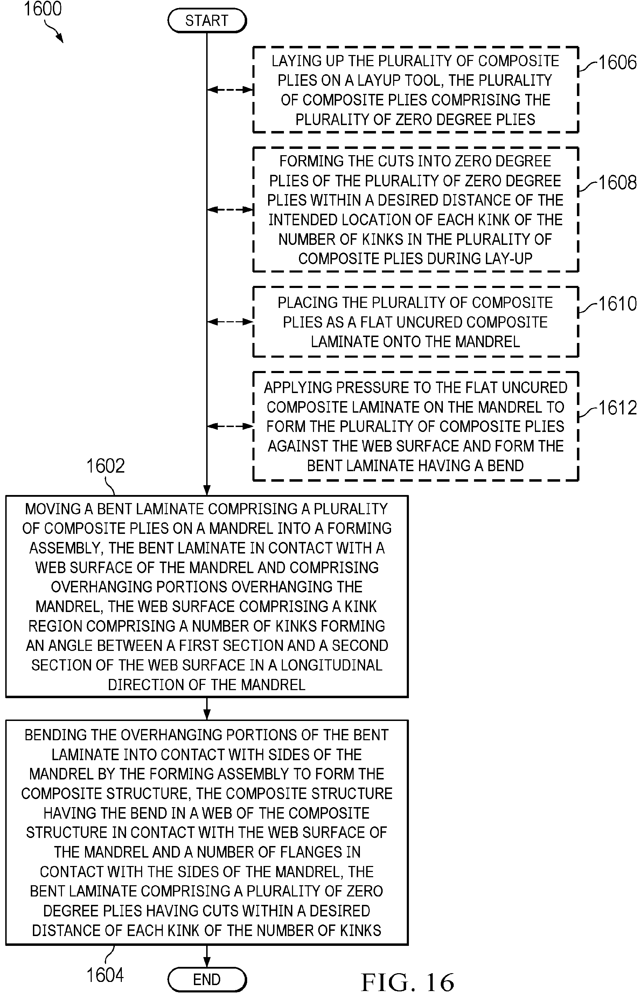

Turning now to **Figure 16****,** a flowchart of a method of forming a composite structure with a bend in a web and a number of flanges of the composite structure is depicted in accordance with an illustrative embodiment. Method **1600** can be performed to form a composite structure of aircraft **100** of **Figure 1****.** Method **1600** can be used to form composite structure **298** of **Figure 2****.** Method **1600** can be used to perform first forming **304** and second forming **306** of **Figure 3****.** Method **1600** can be used to form composite structure **500** of **Figure 5****.** Method **1600** can be performed using mandrel **600** of **Figures 6-14****.** Method **1600** can be performed on composite laminate **702** of **Figures 7-14****.**

Method **1600** moves a bent laminate comprising a plurality of composite plies on a mandrel into a forming assembly, the bent laminate in contact with a web surface of the mandrel and comprising overhanging portions overhanging the mandrel, the web surface comprising a kink region comprising a number of kinks forming an angle between a first section and a second section of the web surface in a longitudinal direction of the mandrel (operation **1602).** Method **1600** bends the overhanging portions of the bent laminate into contact with sides of the mandrel by the forming assembly to form the composite structure, the composite structure having the bend in a web of the composite structure in contact with the forming surface of the mandrel and number of flanges in contact with the sides of the mandrel, the bent laminate comprising a plurality of zero degree plies having cuts within a desired distance of each kink of the number of kinks (operation **1604)**.

In some illustrative examples, method **1600** lays up the plurality of composite plies on a layup tool (operation **1606).** In some illustrative examples, method **1600** forms the cuts into zero degree plies of the plurality of zero degree plies within a desired distance of the intended location of each kink of the number of kinks in the plurality of composite plies during lay-up (operation **1608)**.

In some illustrative examples, method **1600** places the plurality of composite plies as a flat uncured composite laminate onto the mandrel (operation **1610).** In some illustrative examples, method **1600** applies pressure to the flat uncured composite laminate on the mandrel to form the plurality of composite plies against the web surface and form the bent laminate having a bend (operation **1612)**.

As used herein, the phrase "at least one of," when used with a list of items, means different combinations of one or more of the listed items may be used and only one of each item in the list may be needed. For example, "at least one of item A, item B, or item C" may include, without limitation, item A, item A and item B, or item B. This example also may include item A, item B, and item C or item B and item C. Of course, any combinations of these items may be present. In other examples, "at least one of" may be, for example, without limitation, two of item A; one of item B; and ten of item C; four of item B and seven of item C; or other suitable combinations. The item may be a particular object, thing, or a category. In other words, at least one of means any combination items and number of items may be used from the list but not all of the items in the list are required.

As used herein, "a number of," when used with reference to items means one or more items.

The flowcharts and block diagrams in the different depicted embodiments illustrate the architecture, functionality, and operation of some possible implementations of apparatuses and methods in an illustrative embodiment. In this regard, each block in the flowcharts or block diagrams may represent at least one of a module, a segment, a function, or a portion of an operation or step.

In some alternative implementations of an illustrative embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram. Some blocks may be optional. For example, operation **1510** through operation **1530** may be optional. For example, operation **1606** through operation **1612** may be optional.

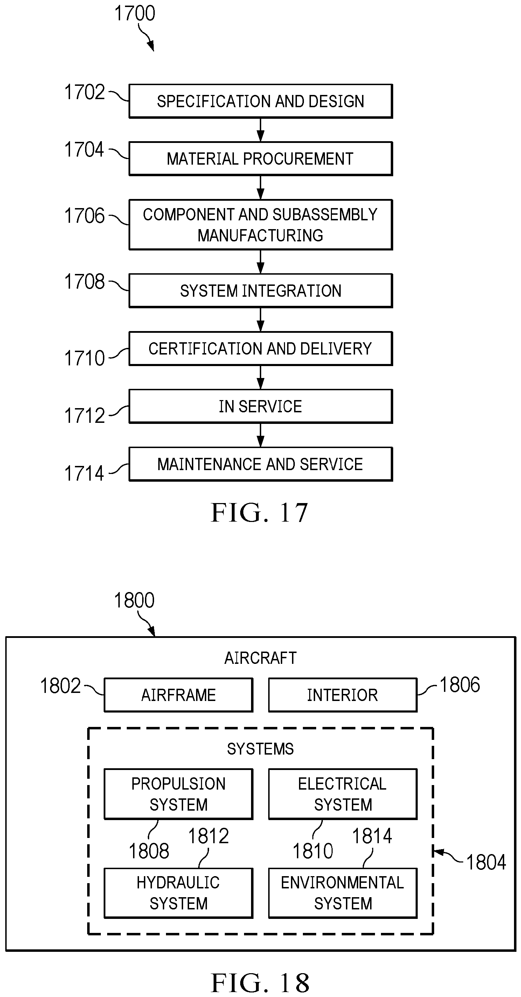

Illustrative embodiments of the present disclosure may be described in the context of aircraft manufacturing and service method **1700** as shown in **Figure 17** and aircraft **1800** as shown in **Figure 18****.** Turning first to **Figure 17****,** an illustration of an aircraft manufacturing and service method in a form of a block diagram is depicted in accordance with an illustrative embodiment. During pre-production, aircraft manufacturing and service method **1700** may include specification and design **1702** of aircraft **1800** in **Figure 18** and material procurement **1704.**

During production, component and subassembly manufacturing **1706** and system integration **1708** of aircraft **1800** takes place. Thereafter, aircraft **1800** may go through certification and delivery **1710** in order to be placed in service **1712.** While in service **1712** by a customer, aircraft **1800** is scheduled for routine maintenance and service **1714,** which may include modification, reconfiguration, refurbishment, or other maintenance and service.

Each of the processes of aircraft manufacturing and service method **1700** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 18****,** an illustration of an aircraft in a form of a block diagram is depicted in which an illustrative embodiment may be implemented. In this example, aircraft **1800** is produced by aircraft manufacturing and service method **1700** of **Figure 17** and may include airframe **1802** with plurality of systems **1804** and interior **1806.** Examples of systems **1804** include one or more of propulsion system **1808,** electrical system **1810,** hydraulic system **1812,** and environmental system **1814.** Any number of other systems may be included.

Apparatuses and methods embodied herein may be employed during at least one of the stages of aircraft manufacturing and service method **1700.** One or more illustrative embodiments may be manufactured or used during at least one of component and subassembly manufacturing **1706,** system integration **1708,** in service **1712,** or maintenance and service **1714** of **Figure 17****.**

The illustrative examples present methods and apparatuses to create a composite structure with at least one kink. The illustrative examples can be used to manufacture a composite structure with multiple kinks. In the illustrative examples, discontinuous zero plies mitigate tension during forming of the flange.

In the illustrative examples, an uncured composite laminate is placed on the kinked web of a mandrel and support brackets. The flat charge is formed to the web surface kink before flange forming. Pressure is applied on the web surface during forming. In some illustrative examples, forming bladders match the kink. In some illustrative examples, pressure is gradually added to bend/stretch laminate into shape without wrinkling. The illustrative examples are performed at room temperature.

The cut zeros are positioned in a desired portion for a kink in the layup. A kink is formed in the flat laminate in a first forming process. In the illustrative examples, at least a portion of the zero degree plies in the composite laminate are cut in a staggered pattern. In some illustrative examples, cuts in the zero degree plies extend across the whole width of a respective zero ply, including portions that will form a number of flanges and across the web. In some illustrative examples, cuts are present only in the number of flanges of a respective zero ply. In some illustrative examples, at least one zero degree ply in the stack is not cut to keep the laminate from over stretching.

In some illustrative examples, a web shim is placed on the kinked laminate to evenly distribute compression load through at least the kink. In some illustrative examples, the web shim is created to fill in the gap between the kinked web surface and a flat web pressure application of the forming assembly. In some illustrative examples, the web shim is made to match the kink. The web shim holds the web of the composite laminate in place during forming. In other illustrative examples, presser feet can be used.

The kinked laminate on the mandrel is moved into a forming assembly. The forming assembly has urging devices that match the kink of the mandrel. In some illustrative examples, the urging devices take the form of bladders that match the kink of the mandrel. In some illustrative examples, some of the support brackets are removed prior to forming the number of flanges in the forming machine.

In some illustrative examples, the kinked laminate is heated to forming temperature using heat plates for the non-kinked areas. In some illustrative examples, the kinked areas of the laminate are heated by non-contact methods such as forced air heaters, IR heating, or induction heating.

In some illustrative examples, non-contact heaters are aimed at both the top and bottom surfaces of the composite laminate during the second forming operation. In some illustrative examples, non-contact heaters are aimed at both the top and bottom surfaces of the composite laminate and both move with the laminate as the number of flanges are formed. The top heater has an attachment to spread the heat over the entire kink forming area.

In these illustrative examples, the nozzles of a forced air heater are aimed at the kinked area of the composite laminate. The non-contact heater, such as a forced air heater can be attached to the moving portion of the forming assembly such that the heater is continuously aimed at a portion of the composite laminate that is being formed.

In the illustrative examples, the flange portion of the composite structure is formed using sweeping by the forming assembly. Support brackets are used to support the composite laminate during the second forming and transfer into the forming machine.

The support brackets can be held to the mandrel using any desirable movable method. In some illustrative examples, the support brackets are held to the mandrel using strong magnets and slide down the side of the mandrel as the laminate is formed, continuing to support the laminate through the forming process.

In some illustrative examples, longer support brackets under the kinked areas are kept in place and are slid down the mandrel sides during forming by the laminate. In some illustrative examples, the support brackets under the non-kinked areas are removed and a heat plate is slid under the laminate to heat the material to forming temperature.

Further, the current disclosure comprises embodiments according to the following clauses:
Clause 1. A method of forming a composite structure with a bend in a web and a number of flanges of the composite structure, the method comprising:
   placing a flat uncured composite laminate in contact with a forming surface of a mandrel;
   applying pressure to a portion of the flat uncured composite laminate over a kink region in the forming surface of the mandrel to form a bent laminate, the flat uncured composite laminate comprising a plurality of zero degree plies discontinuous along a respective length;
   placing the bent laminate and the mandrel into a forming assembly; and
   bending overhanging portions of the bent laminate into contact with sides of the mandrel by the forming assembly to form the composite structure, the composite structure having the bend in a web of the composite structure in contact with the forming surface of the mandrel and a number of flanges in contact with the sides of the mandrel.
Clause 2. The method of clause 1, wherein applying the pressure comprises applying the pressure downward using a presser foot locally over the portion of the flat uncured composite laminate over the kink region of the forming surface, and further comprising:
   applying a vacuum to the flat uncured composite laminate to hold the flat uncured composite laminate against a vacuum chuck while the pressure is applied. Clause 3. The method of clause 1 or 2, wherein bending the overhanging portions of the bent laminate comprises sweeping the overhanging portions downward onto flange forming surfaces of the mandrel.
Clause 4. The method of any of clause 1 to 3, wherein sweeping the overhanging portions comprises sweeping the overhanging portions downward using urging devices.
Clause 5. The method of any of clause 1 to 4, wherein placing the flat uncured composite laminate in contact with the forming surface comprises placing the flat uncured composite laminate in contact with a web surface of the mandrel and in contact with support brackets movably connected to flange forming surfaces of the mandrel on either side of the web surface of the mandrel.
Clause 6. The method of clause 5, wherein bending overhanging portions of the bent laminate pushes the support brackets downward on the flange forming surfaces of the mandrel.
Clause 7. The method of any of clause 1 to 6, further comprising:
   laying up a plurality of composite plies including the plurality of zero degree plies; and
   cutting each zero degree ply of the plurality of zero degree plies across its width within a desired distance of an intended location of each kink of the kink region to form the flat uncured composite laminate.
Clause 8. The method of clause 7, wherein cutting each zero degree ply comprises cutting zero degree plies of the plurality of zero degree plies in a staggered fashion through a thickness of the flat uncured composite laminate.
Clause 9. The method of clause 7, wherein cutting each zero degree ply comprises cutting zero degree plies of the plurality of zero degree plies a plurality of distances from the intended location of each kink of the kink region.
Clause 10. The method of any of clauses 1 to 9, further comprising:
   locally heating the bent laminate at the kink region using forced air heating while bending the overhanging portions of the bent laminate.
Clause 11. The method of any of clauses 1 to 10, further comprising:
   applying pressure to the bent laminate using a shim having a curvature with the kink region to maintain contact between the bent laminate and the forming surface during the bending.
Clause 12. A forming system comprising:
   a mandrel comprising a web surface with a kink region and flange forming surfaces on either side of the web surface, the flange forming surfaces connected to the web surface by two corner forming edges.
Clause 13. The forming system of clause 12, further comprising:
   support brackets movably connected to the flange forming surfaces of the mandrel.
Clause 14. The forming system of clause 13, wherein the support brackets are magnetically connected to the flange forming surfaces.
Clause 15. The forming system of any of clauses 12 to 14, further comprising:
   a presser foot configured to apply pressure locally over the kink region in the web surface.
Clause 16. The forming system of any of clauses 12 to 15, further comprising:
   a heater assembly configured to apply forced air heating locally to composite material over the kink region.
Clause 17. The forming system of any of clause 12 to 16, further comprising:
   a number of sweepers having a curvature matching the web surface of the mandrel.
Clause 18. The forming system of any of clauses 12 to 17, further comprising:
   a shim having a curvature configured to maintain contact between a composite laminate and the web surface. Clause 19. The forming system of any of clauses 12 to 18, wherein the web surface comprises the kink region comprising a number of kinks forming an angle between a first section and a second section of the web surface in a longitudinal direction of the mandrel.
Clause 20. A method of forming a composite structure with a bend in a web and a number of flanges of the composite structure, the method comprising:
   moving a bent laminate comprising a plurality of composite plies on a mandrel into a forming assembly, the bent laminate in contact with a web surface of the mandrel and comprising overhanging portions overhanging the mandrel, the web surface comprising a kink region comprising a number of kinks forming an angle between a first section and a second section of the web surface in a longitudinal direction of the mandrel; and
   bending the overhanging portions of the bent laminate into contact with sides of the mandrel by the forming assembly to form the composite structure, the composite structure having the bend in a web of the composite structure in contact with the web surface of the mandrel and a number of flanges in contact with the sides of the mandrel, the bent laminate comprising a plurality of zero degree plies having cuts within a desired distance of each kink of the number of kinks.
Clause 21. The method of clause 20, further comprising:
   laying up the plurality of composite plies on a layup tool, the plurality of composite plies comprising the plurality of zero degree plies; and
   forming cuts into zero degree plies of the plurality of composite plies within a desired distance of an intended location of each kink of the number of kinks in the plurality of composite plies during lay-up.
Clause 22. The method of clause 21, further comprising:
   placing the plurality of composite plies as a flat uncured composite laminate onto the mandrel; and
   applying pressure to the flat uncured composite laminate on the mandrel to form the plurality of composite plies against the web surface and form the bent laminate having a bend.
Clause 23. A method of forming a bend in a composite structure, the method comprising:
   staggering cuts of a plurality of zero degree plies through a thickness of a flat uncured composite laminate as it is laid up;
   arranging cut fibers of the plurality of zero degree plies roughly parallel to a longitudinal axis of a mandrel while placing the flat uncured composite laminate onto the mandrel;
   forming the bend in the flat uncured composite laminate by creating gaps between ends of the cut fibers in the plurality of zero degree plies while maintaining overlaps between successive staggered cut zero plies of the plurality of zero degree plies; and
   evenly distributing a compression load on fibers of the flat uncured composite laminate regardless of fiber orientation through at least the bend during the forming.
Clause 24. The method of clause 23, wherein the flat uncured composite laminate comprises a plurality of composite plies including the plurality of zero degree plies, and wherein forming the bend comprises forming a number of flanges of the composite structure by sweeping overhanging portions of the plurality of composite plies onto sides of the mandrel.
Clause 25. The method of clause 24, wherein sweeping the overhanging portions of the plurality of composite plies comprises sweeping the overhanging portions downward using bladders matching the bend.
Clause 26. The method of clause 24 or 25, wherein a size of a gap between the ends of the cut fibers increases moving down a flange of the number of flanges away from a web of the composite structure.
Clause 27. The method of clause 26, wherein forming the bend further comprises applying pressure on a portion of the flat uncured composite laminate over a kink region in the mandrel to form the bend in the web of the composite structure, and wherein gaps in the web of the composite structure are smaller than gaps in the number of flanges of the composite structure.
Clause 28. The method of any of clauses 24 to 27, further comprising:
   heating the plurality of composite plies to a forming temperature prior to forming the number of flanges.
Clause 29. The method of clause 28 further comprising:
   locally heating the plurality of composite plies over a kink region of the mandrel using one of forced air heating, infrared heating, or induction heating while bending the overhanging portions.

The description of the different illustrative embodiments has been presented for purposes of illustration and description, and is not intended to be exhaustive or limited to the embodiments in the form disclosed. Many modifications and variations will be apparent to those of ordinary skill in the art. Further, different illustrative embodiments may provide different features as compared to other illustrative embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A method (1500) of forming a composite structure (298, 1402) with a bend (268, 1404) in a web (291, 1408) and a number of flanges (293) of the composite structure (298, 1402), the method (1500) comprising:
placing (1502) a flat uncured composite laminate (240, 701) in contact with a forming surface (230, 620) of a mandrel (204, 600);
applying (1504) pressure (264) to a portion (258) of the flat uncured composite laminate (240, 701) over a kink region (208, 613) in the forming surface (230, 620) of the mandrel (204, 600) to form a bent laminate (266, 906), the flat uncured composite laminate (240, 701) comprising a plurality of zero degree plies (244) discontinuous along a respective length;
placing (1506) the bent laminate (266, 906) and the mandrel (204, 600) into a forming assembly (276); and
bending (1508) overhanging portions (257, 802) of the bent laminate (266, 906) into contact with sides (220, 604) of the mandrel (204, 600) by the forming assembly (276) to form the composite structure (298, 1402), the composite structure (298, 1402) having the bend (268) in a web (291) of the composite structure (298, 1402) in contact with the forming surface (230, 620) of the mandrel (204, 600) and a number of flanges (293) in contact with the sides (220, 604) of the mandrel (204, 600) .

2. The method (1500) of claim 1, wherein (1520) applying the pressure (264) comprises applying the pressure (264) downward using a presser foot (262, 902) locally over the portion of the flat uncured composite laminate (240, 701) over the kink region (208, 613) of the forming surface (230, 620), and further comprising:
applying a vacuum to the flat uncured composite laminate (240, 701) to hold the flat uncured composite laminate (240, 701) against a vacuum chuck (265, 710) while the pressure is applied.

3. The method (1500) of claim 1 or 2, wherein (1522) bending the overhanging portions (257, 802) of the bent laminate (266, 906) comprises sweeping the overhanging portions (257, 802) downward onto flange forming surfaces (210, 606) of the mandrel (204, 600).

4. The method (1500) of any of claims 1 to 3, wherein (1524) sweeping the overhanging portions (257, 802) comprises sweeping the overhanging portions (257, 802) downward using urging devices (280, 1104).

5. The method (1500) of any of claims 1 to 4, wherein (1518) placing the flat uncured composite laminate (240, 701) in contact with the forming surface (230, 620) comprises placing the flat uncured composite laminate (240, 701) in contact with a web surface (206, 602) of the mandrel 204, 600) and in contact with support brackets 232, 236, 704) movably connected to flange forming surfaces (210, 606) of the mandrel (204, 600) on either side of the web surface (206, 602) of the mandrel (204, 600), in particular wherein (1526) bending overhanging portions (257, 802) of the bent laminate (266, 906) pushes the support brackets (232, 236, 704) downward on the flange forming surfaces (210, 606) of the mandrel (204, 600).

6. The method (1500) of any of claims 1 to 5, further comprising:
laying up (1510) a plurality of composite plies (242) including the plurality of zero degree plies (244); and
cutting (1512) each zero degree ply of the plurality of zero degree plies (244) across its width (249) within a desired distance (252) of an intended location (260) of each kink (209, 612, 614) of the kink region (208, 613) to form the flat uncured composite laminate (240, 701), in particular wherein (1514) cutting each zero degree ply comprises cutting zero degree plies of the plurality of zero degree plies (244) in a staggered fashion (250) through a thickness (256) of the flat uncured composite laminate (240, 701).

7. The method (1500) of any of claims 1 to 6, further comprising:
locally (1528) heating the bent laminate (266, 906) at the kink region (208, 613) using forced air heating (283, 1302) while bending the overhanging portions (257, 802) of the bent laminate (266, 906).

8. The method (1500) of any of claims 1 to 7, further comprising:
applying (1530) pressure (264) to the bent laminate (266, 906) using a shim (270, 1002) having a curvature (272) with the kink region (274) to maintain contact between the bent laminate (266, 906) and the forming surface (230, 620) during the bending.

9. A forming system (202) comprising:
a mandrel (204, 600) comprising a web surface (206, 602) with a kink region (208, 613) and flange forming surfaces (210, 606) on either side of the web surface (206, 602), the flange forming surfaces (210, 606) connected to the web surface (206, 602) by two corner forming edges (212, 214).

10. The forming system (202) of claim 9, further comprising:
support brackets (232, 236, 704) movably connected to the flange forming surfaces (210, 606) of the mandrel (204, 600), in particular wherein the support brackets (232, 236, 704) are magnetically connected to the flange forming surfaces (210, 606).

11. The forming system (202) of claim 9 or 10, further comprising:
a presser foot (262, 902) configured to apply pressure (264) locally over the kink region (208, 613) in the web surface (206, 602).

12. The forming system (202) of any of claims 9 to 11, further comprising:
a heater assembly (278, 1302) configured to apply forced air heating (283) locally to composite material over the kink region (208, 613).

13. The forming system (202) of any of claims 9 to 12, wherein the web surface (206, 602) comprises the kink region (208, 613) comprising a number of kinks (209, 612, 614) forming an angle (222) between a first section (224, 616) and a second section (226, 618) of the web surface (206, 602) in a longitudinal direction (228) of the mandrel (204, 600).

14. A method (1600) of forming a composite structure (298, 1402) with a bend (268) in a web (291) and a number of flanges (293) of the composite structure (298, 1402), the method comprising:
moving (1602) a bent laminate (266, 906) comprising a plurality of composite plies (242) on a mandrel (204, 600) into a forming assembly (276), the bent laminate (266, 906) in contact with a web surface (206, 602) of the mandrel (204, 600) and comprising overhanging portions (257, 802) overhanging the mandrel (204, 600), the web surface (206, 602) comprising a kink region (208, 613) comprising a number of kinks (209, 612, 614) forming an angle (222) between a first section (224, 616) and a second section (226, 618) of the web surface (206, 602) in a longitudinal direction (228) of the mandrel (204, 600); and
bending (1604) the overhanging portions (257, 802) of the bent laminate (266, 906) into contact with sides (220, 604) of the mandrel (204, 600) by the forming assembly (276) to form the composite structure (298, 1402), the composite structure (298, 1402) having the bend (268, 1404) in a web (291, 1408) of the composite structure (298, 1402) in contact with the web surface (206, 602) of the mandrel (204, 600) and a number of flanges (293, 1406) in contact with the sides (220, 604) of the mandrel (204, 600), the bent laminate comprising a plurality of zero degree plies (244) having cuts (246) within a desired distance (252) of each kink of the number of kinks (209, 612, 614).

15. A method (400) of forming a bend (268) in a composite structure (298, 1402), the method comprising:
staggering (1702) cuts (246) of a plurality of zero degree plies (244) through a thickness (256) of a flat uncured composite laminate (240) as it is laid up;
arranging (404) cut fibers of the plurality of zero degree plies (244) roughly parallel to a longitudinal axis of a mandrel (204, 600) while placing the flat uncured composite laminate (240) onto the mandrel (204, 600) ;
forming (406) the bend (268) in the flat uncured composite laminate (240) by creating gaps (297) between ends of the cut fibers in the plurality of zero degree plies (244) while maintaining overlaps (299) between successive staggered cut zero plies of the plurality of zero degree plies; and
evenly (408) distributing a compression load on fibers of the flat uncured composite laminate regardless of fiber orientation through at least the bend (268) during the forming.
